# EUROPÄISCHE PATENTSCHRIFT

(11) **EP 0 825 361 B1**
(45) Veröffentlichungstag und Bekanntmachung des Hinweises auf die Patenterteilung: **03.01.2001**
(21) Anmeldenummer: 97890145.2
(22) Anmeldetag: 25.07.1997
(51) Int. Cl.: F16H 19/00, F16H 55/10

(54) **Verstellmechanismus**
Adjustment mechanism
Mécanisme de réglage

(30) Priorität: 16.08.1996 AT 147696
(43) Veröffentlichungstag der Anmeldung: 25.02.1998
(73) Patentinhaber: Blaha, Friedrich, Mag. Ing., 2100 Korneuburg/Bisamberg (AT)
(72) Erfinder: Blaha, Friedrich, Mag. Ing., 2100 Korneuburg/Bisamberg (AT)
(74) Vertreter: Israiloff, Peter, Dr. Dipl.-Ing.

(56) Entgegenhaltungen:
- EP-A- 0 116 965
- DE-A- 2 160 280
- FR-A- 2 029 162
- FR-A- 2 077 168
- GB-A- 1 298 534
- GB-A- 2 293 972
- US-A- 2 509 161
- US-A- 3 361 474

## Beschreibung

Die Erfindung bezieht sich auf einen Verstellmechanismus mit zwei relativ zueinander bewegbaren und gegenseitig abgestützten Bauteilen, von denen der erste Bauteil wenigstens eine Reihe von im wesentlichen zykloidenförmigen Zähnen aufweist, und mit einem im zweiten Bauteil quer zur Verstellrichtung geführten Antriebselement mit wenigstens zwei über die Zähne wälzbaren Triebstöcken, wobei das Antriebselement mit seiner Mantelfläche gegen wenigstens eine Angriffsfläche abgestützt ist und in Rastposition der Triebstöcke die im Berührpunkt der Mantelfläche errichtete Flächennormale der Angriffsfläche im wesentlichen zwischen den Achsen zweier in Zahnlücken eingreifender sowie am Zahngrund anliegender Triebstöcke verläuft.

Ein derartiger Verstellmechanismus ist z.B. durch die GB-A-1 298 534 im Zusammenhang mit einem Wagenheber bekanntgeworden, wobei die Zähne des ersten Bauteils von etwa halbzylindrischen Nuten begrenzt werden. Das Prinzip der Abstützung der Mantelfläche eines Antriebselementes im Berührungspunkt einer Angriffsfläche ist auch bei einem Wagenheber gemäß der CH-A-455 202 verwirklicht worden, bei dem der erste Bauteil allerdings keine Zähne aufweist.

Solche Verstellmechanismen dienen allgemein zur Bewegung bzw. Einstellung von Bauteilen verschiedener Art, welche keine stufenlose Verstellung benötigen, sondern Positionierungen in insbesondere regelmäßig verteilten, vorbestimmten Stellungen, also einen Schrittantrieb. Es handelt sich hiebei insbesondere um Vorrichtungen, die an unterschiedliche Körpergrößen ihrer Benutzer angepaßt werden sollen und dann in der gewählten Stellung arretiert sein müssen, wie Schreibtische, Stühle, Arm- und Rückenlehnen, Pulte, Arbeitsbühnen etc. (vgl. EP-A-0 116 965, FR-A-2 077 168, GB-A-2 293 972, US-A-3 361 474), aber auch andere Getriebe, die in der Regel von Hand bedient werden, wie Fensterhebe-Vorrichtungen, Sonnenschutzeinrichtungen, Hebe- oder Seilwinden, Spanneinrichtungen usw. (DE 21 60 280 A, US-A-2 509 161).

Bei Triebstockgetrieben ist es schließlich bekannt, zur Verringerung der Reibung die Triebstöcke drehbar zu lagern (vgl. FR-A-2 029 162).

Nachteilig bei den meisten bekannten Verstellmechanismen ist der Umstand, daß das Antriebselement nicht belastungssicher zwangsgeführt ist und daß sie nicht ohne weiteres in eine Stellung gebracht werden können, die eine Montage bzw. Demontage ermöglicht.
Ziel der Erfindung ist die Beseitigung dieses Nachteils.
Dieses Ziel wird mit einem Verstellmechanismus der eingangs genannten Art erfindungsgemäß dadurch erreicht, daß der erste Bauteil eine Reihe aneinandergrenzender bogenförmiger Ausnehmungen aufweist, die der Reihe Zähne gegenüberliegt, wobei der Bogenradius dem um den Radius eines Triebstockes vermehrten Abstand zweier Triebstockachsen entspricht und daß in einem Endbereich der Reihe Zähne eine Öffnung im ersten Bauteil vorgesehen ist, die größer als das Antriebselement ist, wobei der letzte Zahn in diesem Endbereich einen von der Zahnteilung abweichenden, größeren Abstand vom vorletzten Zahn aufweist.

Durch die bogenförmigen Ausnehmungen wird das Antriebselement in jeder Stellung unabhängig von der Belastung zwangsgeführt. Der speziell ausgestaltete Endbereich der Zahnreihe gestattet einen leichten Zusammenbau des Verstellmechanismus.

In vorteilhafter Ausgestaltung der Erfindung kann das Antriebselement gegen eine Angriffsflache abgestützt sein, die einen Abschnitt einer senkrecht zur Verstellrichtung verlaufenden Führung bildet, wodurch eine besonders einfache Konstruktion erzielt wird.

Weiters kann die Führung eine der Angriffsfläche im wesentlichen spiegelbildlich gegenüberliegende zweite Angriffsfläche aufweisen, wodurch der Verstellmechanismus in beiden Richtungen wirksam werden kann.

Zur Reibungsverminderung und somit zur leichteren Betatigung des Verstellmechanismus kann das Antriebselement gegen eine Angriffsflache abgestützt sein, die einen Abschnitt des lumenrings eines Wälzlagers darstellt.

Eine äußerst kompakte, platzsparende Konstruktion ergibt sich, wenn die Mantelfläche des Antriebselements ein elliptischer Zylinder ist.

Einen besonders reibungsarmen Verstellmechanismus erzielt man, wenn das Antriebselement nach Art eines Wälzlagers ausgebildet ist.

Weiters kann das Antriebselement die Form eines Prismas aufweisen, wobei die Triebstöcke bei ungerader Anzahl der Prismenkanten im Bereich der Prismenkanten und bei gerader Anzahl der Prismenkanten mittig zwischen den Prismenkanten angeordnet sind. Auf diese Weise wird das Antriebselement nicht nur kraft-, sondern auch formschlüssig in seiner jeweiligen Raststellung arretiert.

Ein einfach herzustellender und dennoch robuster Verstellmechanismus wird erreicht, wenn die Triebstöcke hohl und vorzugsweise Spannhülsen sind. Letztere ermöglichen die Herstellung des Antriebselements mit relativ großen Toleranzen.

Zur Reibungsverminderung und somit zur leichteren Betatigung des Verstellmechanismus dient eine Variante der Erfindung, bei der die Triebstöcke im Antriebselement drehbar gelagert sind.

Günstig ist, wenn die Triebstöcke aus dem zweiten Bauteil herausragen, weil dies das Anbringen eines Werkzeuges, Gerätes oder Motorantriebes zur Betätigung des Verstellmechanismus erleichtert.

Im Einklang mit der Erfindung kann das Antriebselement eine zentrale Bohrung zur Aufnahme eines Vielnut-Steckschlüssels aufweisen, die von Kreiszylinder-Teilflächen begrenzt ist, welche Teilen der Mantelflächen der Triebstöcke und Teilen einer etwa zu den Triebstockachsen reichenden Kreiszylinderfläche entsprechen.

Weiters ist von Vorteil, wenn die Reihe Zähne linear sowie unter einem Winkel zur Verstellrichtung verläuft, weil dann die Länge eines Verstellschrittes kleiner als die Zahnteilung ist.

Eine progressive Verstellung erreicht man, wenn die Reihe Zähne krummlinig und/oder polygonal unter einem Winkel zur Verstellrichtung verläuft.

Der Verstellmechanismus ist nicht auf lineare Bewegungen beschränkt. Weitere Varianten der Erfindung ermöglichen Dreh- und Schwenkbewegungen.

Derartige Bewegungen lassen sich erzielen, wenn der erste Bauteil als Scheibe oder Scheibenabschnitt ausgebildet ist und die Reihe Zähne an deren Umfang bzw. Bogenabschnitt angeordnet ist. Dies ermöglicht die Anwendung der Erfindung z. B. auf Seilwinden, Klappen, Kippfenster od.dgl.

Für gewisse Anwendungen, z.B. bei Schreib- oder Zeichentischen, kann der Verstellmechanismus mit wenigstens einem weiteren Verstellmechanismus baulich vereinigt oder gekuppelt sein, wobei die Antriebselemente verdrehsteif, gegebenenfalls lösbar miteinander verbunden sind.

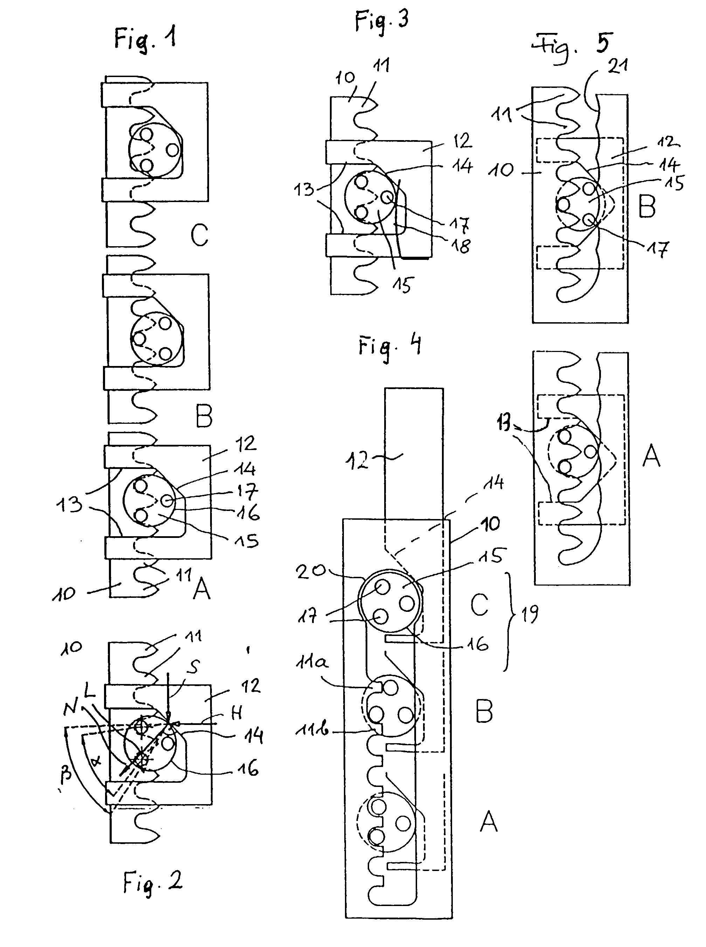

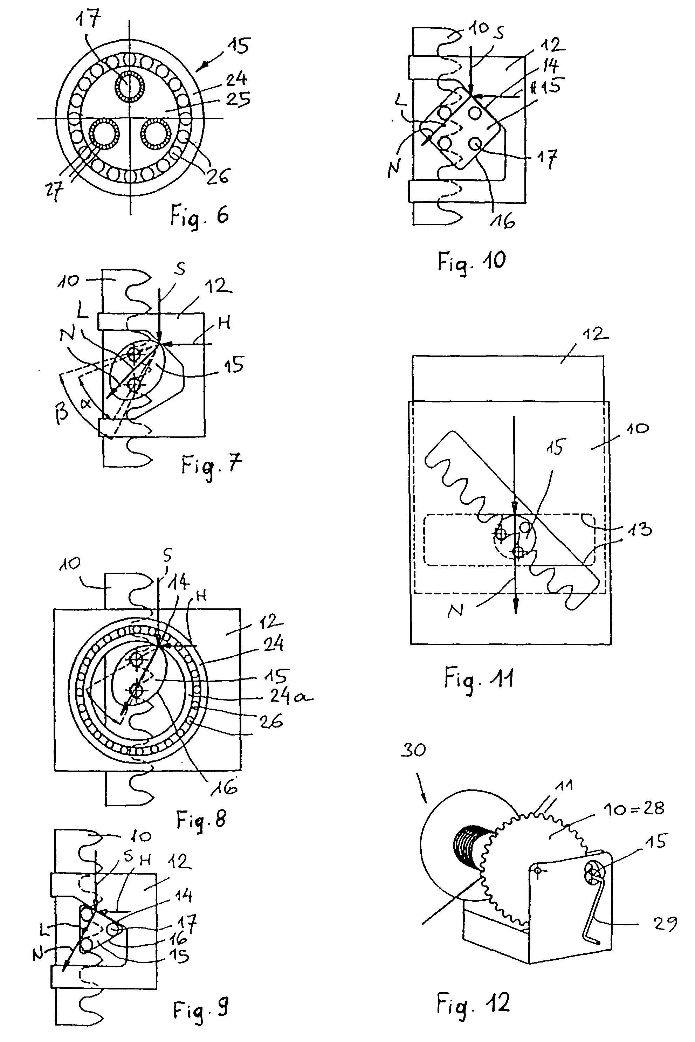

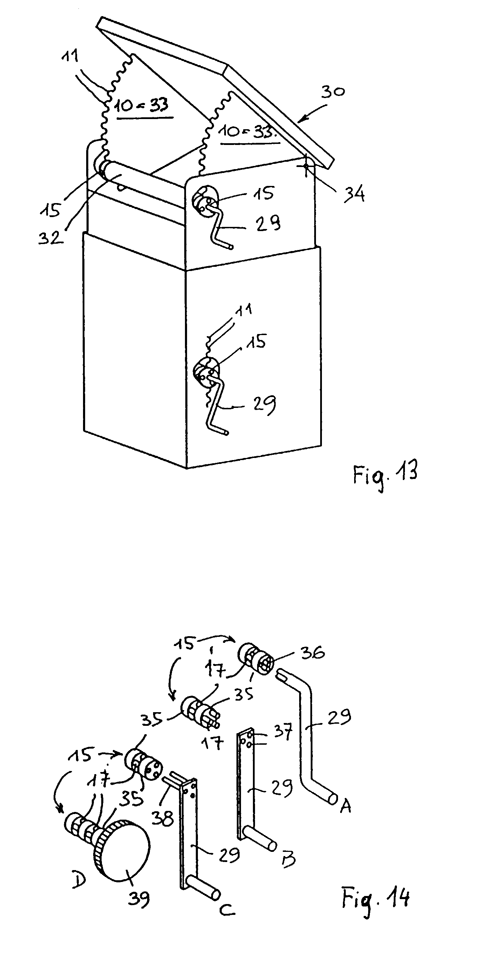

Die Erfindung wird im folgenden anhand bevorzugter Ausführungsbeispiele näher erläutert, die in den Zeichnungen schematisch dargestellt sind; es zeigt Fig. 1 einen Verstellmechanismus in drei verschiedenen Stellungen, Fig. 2 diesen Verstellmechanismus und die bei ihm auftretenden Kräfte, Fig. 3 eine Sicherung für das Antriebselement, Fig. 4 einen erfindungsgemaßen Endbereich der Reihe Zähne, Fig. 5 einen in beide Richtungen verstellbaren Verstellmechanismus mit Zwangsführung des Antriebselements in verschiedenen Stellungen, Fig. 6 eine Variante des Antriebselements, Fig. 7 und 8 je ein elliptisch gestaltetes Antriebselement samt den auftretenden Kräften, Fig. 9 und 10 je ein prismatisch gestaltetes Antriebselement, Fig. 11 eine Ausführungsform der Erfindung mit schräg zur Verstellrichtung verlaufender Reihe Zähne, Fig. 12 und 13 je einen Verstellmechanismus mit gekrümmter Reihe Zähne und Fig. 14 verschiedene Betätigungsgeräte, wobei auch eine weitere Variante des Antriebselements dargestellt ist. Die Ausführungen nach Fig. 1,2,3,5,8-13 zeigen varianten, bei denen die erfindungsgemaße Gestaltung des Endbereichs 19 zeichnerisen nicht dargestellt ist.

Fig. 1 und 2 zeigen einen bekannten Verstellmechanismus, u.zw. in Raststellung (A), während der Verstellung (B) und das Antriebselement 15 in seiner am weitesten möglichen aus den Zahnlücken ausgerückten Stellung (C), in der die Zähne am stärksten belastet sind. In Fig. 2 sind die bei dem Verstellmechanismus auftretenden Kräfte eingezeichnet.

Der Verstellmechanismus weist einen ersten Bauteil 10 auf, der eine Reihe im wesentlichen zykloidenförmig ausgebildete Zähne 11 besitzt und einfacherweise eine Zahnstange ist, die in einem zweiten Bauteil 12 längsverschieblich geführt ist. Beispielsweise ist der erste Bauteil 10 an einem Tischbein angebracht oder als Teil eines solchen ausgebildet. Der zweite Bauteil 12 ist dann an einer Tischplatte befestigt. Der zweite Bauteil 12 weist eine senkrecht zum ersten Bauteil 10 und somit zur Verstellrichtung verlaufende Führung 13 auf, die an einer Seite mit einer schräg verlaufenden Angriffsfläche 14 versehen ist. In der Führung 13 ist ein Antriebselement 16 fliegend gelagert, das kreiszylindrisch gestaltet und an einer Stirnfläche drei in gleichen Abständen angeordnete Triebstöcke 17 aufweist.

Gemäß Fig. 2 ist die Angriffsfläche 14 unter einem solchen Winkel zur Verstellrichtung angeordnet, daß ihre Flächennormale N durch eine Linie L verläuft, die zwischen den Achsen zweier in Zahnlücken eingreifender sowie am Zahngrund anliegender Triebstöcke 17 liegt. Dies ist mit dem Winkelbereich a angedeutet. Unter Berücksichtigung der auftretenden Reibungskräfte kann die Flächennormale N auch geringfügig außerhalb der Triebstockachsen verlaufen (Winkelbereich β). In Raststellung liegt die Angriffsfläche 14 an der Mantelfläche 16 des Antriebselements 15 an, wobei auf das Antriebselement 15 die Schwerkraft S und eine Horizontalkraft H wirken, sodaß wegen des Verlaufes der Flächennormale N die in derselben Richtung wirkende resultierende Kraft die beiden in Zahnlücken eingreifenden Triebstöcke 17 sicher an den Zahngrund angedrückt werden und der Verstellmechanismus in der jeweiligen Raststellung sicher arretiert ist. Die Reaktionskräfte in der Lagerung der Bauteile zueinander können bei geeigneter Geometrie das Spiel der Führung 13 ausschalten.

Für die Bewegung zwischen zwei Raststellungen ist eine Drehung des Antriebselements 15 von 120° notwendig.

Die Kräfte der schrägen Angriffsfläche 14, welche die Triebstöcke 17 des Antriebselements 15 in die Verzahnung drängen, sind wie auch die entstehenden Reibungskräfte an den Anlageflächen direkt proportional der Verstellkraft, weil sie durch diese gemäß dem Kräftegleichgewicht entstehen. Daher ist das mechanische Verhalten des Verstellmechanismus im Gegensatz zu federverspannten Mechanismen unabhängig von der Belastung. Trotzdem ist es zweckmäßig, eine schwache Feder 18 (Fig. 3) vorzusehen, welche das an sich frei bewegliche Antriebselement 15 bei vollständiger Entlastung (z.B. bei Transport oder Montage) in Position hält, um ein unbeabsichtigtes Verstellen zu verhindern. Die Federkraft muß aber nur das Eigengewicht des Antriebselements 15 beherrschen und hat für die Verstellung selbst keine Funktion.

Die Flächenpressung innerhalb des Verstellmechanismus ist relativ gering, weil einerseits sich die Triebstöcke 17 in die Rundungen des Zahngrundes schmiegen und andererseits das Antriebselement 15 einen viel größeren Durchmesser als die Triebstöcke 17 aufweist, weshalb die Pressung an der zumeist ebenen Angriffsfläche 14 ebenfalls gering bleibt.

Fig. 4 zeigt den erfindungsgemäßen Endbereich 19 der Reihe Zähne 11, der den Zusammenbau des Verstellmechanismus erleichtert und weiters verhindert, daß das Antriebselement 15 in der Endlage C herausfallen kann. Der erste Bauteil 10 ist mit einer Öffnung 20 versehen, die geringfügig größer ist als das Antriebselement 15, sodaß es durch diese Öffnung 20 seitlich in den ersten Bauteil 10 eingesetzt und in seine vorgesehene Position gebracht werden kann.

Damit im normalen Betrieb die Endlage C nicht erreicht werden kann, ist der letzte Zahn 11a in einem größeren Abstand als eine Zahnbreite vom vorletzten Zahn 11b angeordnet, sodaß das Antriebselement 15 gegen eine weitere Drehung blockiert wird (Stellung B). Diese Position ist nur bei vollständiger Entlastung des Verstellmechanismus und meist zusätzlicher Nachhilfe überwindbar. Die Stellung A stellt eine Raststellung dar.

Fig. 5 zeigt eine Ausführungsform der Erfindung bei der der zweite Bauteil 12 im ersten Bauteil 10 verschieblich gelagert ist, nach beiden Richtungen verstellt werden kann und bei der das Antriebselement 15 zwangsläufig geführt ist.

Damit der Verstellmechanismus in beide Richtungen verstellbar ist, weist der zweite Bauteil 12 zwei Angriffsflächen 14 auf, die einander gegenüberliegen und in diesem Fall symmetrisch zur Mittelachse der Führung 13 angeordnet sind.

Die zwangsläufige Führung des Antriebselements 15 wird dadurch erzielt, daß der erste Bauteil gegenüber der Reihe Zähne 11 eine Reihe aneinandergrenzender bogenförmiger Ausnehmungen 21 aufweist. Dabei entspricht der Bogenradius dem um den Radius eines Triebstockes vermehrten Abstand zweier Triebstockachsen. Die Stellung A stellt die Raststellung dar, während die Stellung B vom Verstellmechanismus während der Verstellung eingenommen wird. Diese Ausführungsform der Erfindung ist am stärksten belastbar.

Fig. 6 zeigt eine Variante des Antriebselements 15, das nach Art eines Wälzlagers ausgebildet ist und einen Außenring 24 und einen innenliegenden Zylinder 25 aufweist, zwischen dem und dem Außenring 24 Wälzkörper 26 vorgesehen sind. Das Antriebselement 15 weist wieder drei in gleichen Abständen angeordnete Triebstöcke 17 auf, die im Zylinder 25 mittels Wälzkörpern 27 drehbar gelagert sind. Auf diese Weise wird ein äußerst reibungsarmer Verstellmechanismus geschaffen.

Die Gestalt des Antriebselements 15 ist nicht auf Kreisylinderform beschränkt.

Die Fig. 7 und 8 zeigen je ein Antriebselement 15, das die Form eines elliptischen Zylinders und zwei Triebstöcke 17 aufweist. Wie bei der Ausführungsform nach Fig. 1 und 2 werden die Triebstöcke 17 mittels einer schrägen Angriffsfläche 14 an den Zahngrund angedrückt, deren Flächennormale N wieder durch eine Linie L verläuft, die im wesentlichen zwischen den Achsen der beiden am Zahngrund anliegenden Triebstöcke 17 liegt (Winkelbereich α), wegen der auftretenden Reibungskräfte aber auch geringfügig außerhalb der Achsen (Winkelbereich β).

In Fig. 8 ist weiters ein besonders reibungsarmer Angriff der Angriffsfläche 14 dargestellt, die von einem Abschnitt des Innenringes 24a eines Wälzlagers gebildet ist, dessen Außenring 24 am zweiten Bauteil 12 angebracht ist. Außerdem ist auch dieser Verstellmechanismus in beiden Richtungen wirksam.

Gemäß Fig. 9 und 10 kann das Antriebselement 15 auch prismatische Gestalt besitzen, wobei es zweckmäßig ist, daß bei ungerader Anzahl der Prismenflächen 16 (Fig. 9) die Triebstöcke 17 im Bereich der Prismenkanten und bei gerader Anzahl der Prismenflächen 16 die Triebstöcke 17 mittig zwischen den Prismenkanten (Fig. 10) angeordnet sind, weil bei dieser Anordnung bei arretiertem Antriebselement 15 die Angriffsfläche 14 parallel zu einer Prismenfläche 16 verlaufen und somit flächig angreifen kann. Dies ergibt eine sowohl kraft- als auch formschlüssige Arretierung des Antriebselements 15 in seiner Raststellung.

Fig. 11 zeigt eine Ausführungsform der Erfindung (ohne zeichnerische Darstellung des Endbereichs 19), bei der der Verstellschritt kleiner als die Zahnteilung ist. Zu diesem Zweck ist die Reihe Zähne 11 linear und schräg zur Verstellrichtung angeordnet.

Die Reihe Zähne 11 kann ferner auch bogenförmig oder polygonal verlaufen, wodurch sich ein progressiv verstellbarer Verstellmechanismus ergibt.

Bogenförmig angeordnete Zähne sind auch bei den Ausführungsformen nach Fig. 12 und 13 vorgesehen, bei denen der erfindungsgemaße Endbereich 19 zeichnerisch nicht dargestellt ist.

Fig. 12 zeigt eine Variante der Erfindung, bei der die Zähne 11 am Umfang einer Scheibe 28 angeordnet sind. Das mit seinen Triebstöcke 17 in die Zähne 11 eingreifende Antriebselement 15 ist wie bei den bislang erläuterten Ausführungsformen in seiner jeweiligen Raststellung arretiert und mit einer Handkurbel 29 verbunden. Die Scheibe 28 ist Teil einer Seilwinde 30, die mit der Handkurbel 29 betätigt werden kann und zum Arretieren keine Sperrklinken benötigt. In diesem Fall wird die Gegenkraft von der Seilzugkraft gebildet.

Eine ähnliche Konstruktion zeigt Fig. 13 die ein höhenverstellbares und kippbares Pult 31 zeigt. Der Verstellmechanismus zur Höhenverstellung ist an der unteren Bildseite gezeigt. Der Verstellmechanismus zum Kippen des Pultes 31 besitzt zwei in einem Abstand angeordnete, auf einer gemeinsamen Welle 32 sitzende Antriebselemente 15, deren Triebstöcke 17 in Zähne 11 eingreifen, die am Bogenabschnitt zweier kreissektorförmigen Wangen 33 angeordnet sind. Die Wangen 33 sind um eine gemeinsame Achse 34 schwenkbar und tragen das Pult 31, das mit Hilfe des Verstellmechanismus unter verschiedenen Winkeln zur horizontalen eingestellt werden kann. Die Antriebselemente 15 beider Verstellmechanismen sind mit einer Handkurbel 29 versehen.

Anstelle der gemeinsamen Welle 32 kann auch ein Kardantrieb oder eine verdrehfeste biegsame Welle vorgesehen sein, was z.B. bei Tischen wegen der erforderlichen Beinfreiheit von Vorteil ist.

In Fig. 14 sind verschiedene Betätigungsgeräte zur Betätigung des Verstellmechanismus bzw. des Antriebselements 15 dargestellt. Desgleichen zeigt Fig. 14 weitere Varianten des Antriebselements 15. Die Grundform dieses Antriebselements 15 besteht aus zwei oder drei parallelen Scheiben 35 (A, B, C bzw. D), zwischen denen die Triebstöcke 17 angeordnet sind. Dabei können die Triebstöcke 17 hohl (C) und vorteilhafterweise Spannhülsen sein, welche durch die Scheiben 35 verlaufen. Anderseits können die Triebstöcke 17 aus dem Antriebselement 15 herausragen (B). Das Antriebselement 15 kann auch an der Stirnseite eine zentrale Bohrung 36 aufweisen (A), deren Radius etwa bis zu den Achsen der Triebstöcke 17 reicht.

Dies ermöglicht das Einsetzen eines Betätigungsgerätes in Form einer Kurbel 29, die an einem Ende nach Art eines Vielnut-Steckschlüssels ausgebildet ist (A).

Ragen die Triebstöcke 17 aus dem Antriebselement 15 heraus (B), so ist die Kurbel 29 am Ende mit einer der Anordnung und vorzugsweise auch der Anzahl der Triebstöcke 17 entsprechenden Anzahl Löcher 37 versehen.

Sind hingegen die Triebstöcke 17 hohl, so ist die Kurbel 29 an einem Ende mit einer der Anordnung und vorzugsweise auch der Anzahl der Triebstöcke 17 entsprechenden Anzahl Stifte 38 versehen (C). Die Verwendung von Spannhülsen als Triebstöcke 17 bietet den weiteren Vorteil der günstigen Herstellung des Antriebselements 15 mit dem Vorteil, daß die Bohrungen im Antriebselement 15 zur Aufnahme der Spannhülsen keine engen Toleranzen erfordern.

Anstelle der Kurbel 29 kann ein Handrad 39 oder ein Motorantrieb zur Betätigung des Antriebselements vorgesehen sein, der mittels einer Drehmomentstütze gehalten wird.

Es versteht sich, daß zur Betätigung des Antriebselements 15 auch andere Geräte, wie Steckschlüssel, Gabel- oder Ringschlüssel od.dgl. verwendet werden können, zu welchem Zweck das Antriebselement 15 auch anders gestaltete, dem Verlauf seiner Achse folgende Ausnehmungen oder Fortsätze, insbesondere prismatische, zum Ansetzen eines Schraubenschlüssels aufweist.

Ein symmetrischer Aufbau des Verstellmechanismus, z.B. zwei außenliegende Reihen Zähne und eine Angriffsfläche in der Mitte oder umgekehrt, führt zu gleichmäßigen Bauteilbelastungen und damit zu einer Erhöhung der Tragfähigkeit.

Die Außengeometrie des Antriebselements 15 und die Geometrie der Führung 13 bestimmen in ihrem Zusammenwirken das mechanische Verhalten. Sie ist zweckentsprechend innerhalb der geometrisch sinnvollen Grenzen wählbar, insbesondere ist die Neigung der Angriffsfläche 14 bestimmend für die Richtung der Reaktionskraft und damit die Größe der Arretierkraft, der Anpreßkraft des Antriebselements 15 in die Reihe Zähne 11, des Kräfteverlaufs beim Verstellen sowie die Spielfreiheit des Verstellmechanismus durch die Reaktionskräfte in der Lagerung der einzelnen Bestandteile zueinander. Insbesondere kann durch eine gekrümmte Ausbildung der Flanken der Führung auch die Richtung der Anpreßkraft innerhalb der geometrisch möglichen Grenzen geändert werden. Die jeweiligen Kräfteverteilungen und Kraftverläufe, sowie Verstellkraft und Verstellweg in Abhängigkeit von der Drehung des Antriebselements bzw. Kurbelkraft lassen sich nach den elementaren Regeln der Mechanik bestimmen.

Eine weitere Gestaltungsmöglichkeit besteht in einer unregelmäßigen Anordnung der Triebstöcke und einer Reihe dazupassend unregelmäßig angeordneter Zähne, falls ungleich große Positionsabstände bzw. Raststellungen verlangt werden.

Eine weitere Ausgestaltung der Erfindung besteht in der Ausführung mit 2, 4 oder mehr Triebstöcke. Obwohl die Ausführung mit 3 Triebstöcken eine überaus günstige Gestaltungsform ist, kann doch für die eine oder andere Funktion eine andere Anzahl Triebstöcke sinnvoll sein.

Der erfindungsgemäße Verstellmechanismus kann auch in horizontaler Anordnung verwendet werden, wobei anstelle der Schwerkraft eine andere Kraftquelle, z.B. eine Feder oder ein Pneumatikzylinder vorgesehen ist.

## Patentansprüche

1. Verstellmechanismus mit zwei relativ zueinander bewegbaren und gegenseitig abgestützten Bauteilen, von denen der erste Bauteil (10) wenigstens eine Reihe von im wesentlichen zykloidenförmigen Zähnen (11) aufweist, und mit einem im zweiten Bauteil (12) quer zur Verstellrichtung geführten Antriebselement (15) mit wenigstens zwei über die Zähne (11) wälzbaren Triebstöcken (17), wobei das Antriebselement mit seiner Mantelfläche (16) gegen wenigstens eine Angriffsfläche (14) abgestützt ist und in Rastposition der Triebstöcke (17) die im Berührpunkt der Mantelfläche (16) errichtete Flächennormale der Angriffsfläche (14) im wesentlichen zwischen den Achsen zweier in Zahnlücken eingreifender sowie am Zahngrund anliegender Triebstöcke (17) verläuft, dadurch gekennzeichnet, daß der erste Bauteil (10) eine Reihe aneinandergrenzender bogenförmiger Ausnehmungen (21) aufweist, die der Reihe Zähne (11) gegenüberliegt, wobei der Bogenradius dem um den Radius eines Triebstockes (17) vermehrten Abstand zweier Triebstockachsen entspricht und daß in einem Endbereich (19) der Reihe Zähne (11) eine Öffnung (20) im ersten Bauteil (10) vorgesehen ist, die größer als das Antriebselement (15) ist, wobei der letzte Zahn (lla) in diesem Endbereich (19) einen von der Zahnteilung abweichenden, größeren Abstand vom vorletzten Zahn (llb) aufweist.

2. Verstellmechanismus nach Anspruch 1, dadurch gekennzeichnet, daß das Antriebselement (15) gegen eine Angriffsfläche (14) abgestützt ist, die einen Abschnitt einer senkrecht zur Verstellrichtung verlaufenden Führung (13) bildet.

3. Verstellmechanismus nach Anspruch 2, dadurch gekennzeichnet, daß die Führung (13) eine der Angriffsfläche (14) im wesentlichen spiegelbildlich gegenüberliegende zweite Angriffsfläche (14) aufweist.

4. Verstellmechanismus nach Anspruch 1, dadurch gekennzeichnet, daß das Antriebselement (15) gegen eine Angriffsfläche (14) abgestützt ist, die einen Abschnitt des Innenringes (24a) eines Wälzlagers darstellt.

5. Verstellmechanismus nach einem der Ansprüche 1 bis 4, dadurch gekennzeichnet, daß die Mantelfläche (16) des Antriebselementes (15) ein elliptischer Zylinder ist.

6. Verstellmechanismus nach einem der Ansprüche 1 bis 5, dadurch gekennzeichnet, daß das Antriebselement (15) nach Art eines Wälzlagers ausgebildet ist.

7. Verstellmechanismus nach einem der Ansprüche 1 bis 3, dadurch gekennzeichnet, daß das Antriebselement (15) die Form eines Prismas aufweist, wobei die Triebstöcke (17) bei ungerader Anzahl der Prismenkanten im Bereich der Prismenkanten und bei gerader Anzahl der Prismenkanten mittig zwischen den Prismenkanten angeordnet sind.

8. Verstellmechanismus nach einem der Ansprüche 1 bis 7, dadurch gekennzeichnet, daß die Triebstöcke (17) hohl und vorzugsweise Spannhülsen sind.

9. Verstellmechanismus nach einem der Ansprüche 1 bis 8, dadurch gekennzeichnet, daß die Triebstöcke (17) im Antriebselement (15) drehbar gelagert sind.

10. Verstellmechanismus nach einem der Ansprüche 1 bis 9, dadurch gekennzeichnet, daß die Triebstöcke (17) aus dem zweiten Bauteil (12) herausragen.

11. Verstellmechanismus nach einem der Ansprüche 1 bis 10, dadurch gekennzeichnet, daß das Antriebselement (15) eine zentrale Bohrung (36) zur Aufnahme eines Vielnut-Steckschlüssels aufweist, die von Kreiszylinder-Teilflächen begrenzt ist, welche Teilen der Mantelflächen der Triebstöcke und Teilen einer etwa bis zu den Triebstockachsen reichenden Kreiszylinderfläche entsprechen.

12. Verstellmechanismus nach einem der Ansprüche 1 bis 11, dadurch gekennzeichnet, daß die Reihe Zähne (11) linear sowie unter einem Winkel zur Verstellrichtung verläuft.

13. Verstellmechanismus nach einem der Ansprüche 1 bis 11, dadurch gekennzeichnet, daß die Reihe Zähne (11) krummlinig und/oder polygonal unter einem Winkel zur Verstellrichtung verläuft.

14. Verstellmechanismus nach einem der Ansprüche 1 bis 11, dadurch gekennzeichnet, daß der erste Bauteil (10) als Scheibe (28) oder Scheibenabschnitt (33) ausgebildet ist und die Reihe Zähne (11) an deren Umfang bzw. Bogenabschnitt angeordnet ist.

15. Verstellmechanismus nach einem der Ansprüche 1 bis 14, dadurch gekennzeichnet, daß der Verstellmechanismus mit wenigstens einem weiteren Verstellmechanismus baulich vereinigt oder gekuppelt ist, wobei die Antriebselemente (15) verdrehsteif, gegebenenfalls lösbar miteinander verbunden sind.

## Claims

1. Adjusting mechanism with two components, which can be moved relative to one another and are supported on one another, of which the first component (10) has at least one row of essentially cylindrical teeth (11), and with a drive element (15) guided in the second component (12) transversely to the direction of adjustment and having at least two pin gears (17), which can be rolled over the teeth (11), the drive element being supported by its lateral surface (16) against at least one engagement surface (14) and, in the latched position of the pin gears (17), the normal to the engagement surface (14) taken at the point of contact of the lateral surface (16) extending essentially between the axes of two pin gears (17) engaging in tooth spaces and resting on the tooth root, characterized in that the first component (10) has a row of adjoining arcuate recesses (21), which lies opposite the row of teeth (11), the arc radius corresponding to the spacing between two pin gear axes increased by the radius of one pin gear (17), and in that, in an end region (19) of the row of teeth (11), an opening (20), which is larger than the drive element (15), is provided in the first component (10), the last tooth (lla) in this end region (19) being at a greater distance from the last-but-one tooth (11b), the said distance differing from the tooth pitch.

2. Adjusting mechanism according to Claim 1, characterized in that the drive element (15) is supported against an engagement surface (14), which forms a section of a guide (13) extending perpendicular to the direction of adjustment.

3. Adjusting mechanism according to Claim 2, characterized in that the guide (13) has a second engagement surface (14), which lies opposite the engagement surface (14), essentially as a mirror image of the latter.

4. Adjusting mechanism according to Claim 1, characterized in that the drive element (15) is supported against an engagement surface (14) which forms a section of the inner race (24a) of a rolling-contact bearing.

5. Adjusting mechanism according to one of Claims 1 to 4, characterized in that the lateral surface (16) of the drive element (15) is an elliptical cylinder.

6. Adjusting mechanism according to one of Claims 1 to 5, characterized in that the drive element (15) is constructed in the manner of a rolling-contact bearing.

7. Adjusting mechanism according to one of Claims 1 to 3, characterized in that the drive element (15) takes the form of a prism, the pin gears (17) being arranged in the region of the corners of the prism if the number of these corners is uneven and being arranged centrally between the corners of the prism if the number of these corners is even.

8. Adjusting mechanism according to one of Claims 1 to 7, characterized in that the pin gears (17) are hollow and are preferably clamping sleeves.

9. Adjusting mechanism according to one of Claims 1 to 8, characterized in that the pin gears (17) are mounted rotatably in the drive element (15).

10. Adjusting mechanism according to one of Claims 1 to 9, characterized in that the pin gears (17) protrude from the second component (12).

11. Adjusting mechanism according to one of Claims 1 to 10, characterized in that the drive element (15) has a central hole (36) for receiving a multi-slot socket spanner, which hole is bounded by part-surfaces of circular cylinders, which surfaces correspond to parts of the lateral surfaces of the pin gears and parts of a circular-cylindrical surface extending approximately as far as the pin-gear axes.

12. Adjusting mechanism according to one of Claims 1 to 11, characterized in that the row of teeth (11) extends in a linear manner and at an angle to the direction of adjustment.

13. Adjusting mechanism according to one of Claims 1 to 11, characterized in that the row of teeth (11) extends in a curvilinear manner and/or polygonally at an angle to the direction of adjustment.

14. Adjusting mechanism according to one of Claims 1 to 11, characterized in that the first component (10) is designed as a disc (28) or disc section (33), and the row of teeth (11) is arranged on its circumference or arc section.

15. Adjusting mechanism according to one of Claims 1 to 14, characterized in that the adjusting mechanism is structurally combined with or coupled to at least one further adjusting mechanism, the drive elements (15) being connected in a torsionally rigid and, if appropriate, releasable manner to one another.

## Revendications

1. Mécanisme de réglage comprenant deux composants mobiles l'un par rapport à l'autre et s'appuyant l'un sur l'autre, dont le premier composant (10) présente au moins une rangée de dents (11) sensiblement cycloïdales, et comprenant un élément d'entraînement (15) monté dans le deuxième composant (12), perpendiculairement à la direction de réglage, comportant au moins deux doigts d'entraînement (17) pouvant rouler sur les dents (11), l'élément d'entraînement étant appuyé, par sa surface latérale (16), contre au moins une surface d'application (14) et, en position d'enclenchement des doigts d'entraînement (17), la normale à la surface d'application, s'élevant au point de contact de la surface latérale (16), s'étendant sensiblement entre les axes de deux doigts d'entraînement (17) qui engrènent dans des entredents et qui reposent au fond de la dent, **caractérisé en ce que** le premier composant (10) présente une rangée d'évidements (21) arqués contigus, située en regard de la rangée de dents (11), le rayon de l'arc correspondant à l'écart, augmenté du rayon d'un doigt d'entraînement (17), entre deux axes de doigts d'entraînement, **et en ce que**, dans une zone terminale (19) de la rangée de dents (11), une ouverture (20) est prévue dans le premier composant (10), qui est plus grande que l'élément d'entraînement (15), la dernière dent (11a), dans cette zone terminale (19) présentant un écart plus important, différent du pas des dents, par rapport à l'avant-dernière dent (11 b).

2. Mécanisme de réglage selon la revendication 1, caractérisé en ce que l'élément d'entraînement (15) est appuyé contre une surface d'application (14), qui constitue un tronçon d'une glissière de guidage (13) qui s'étend perpendiculairement à la direction de réglage.

3. Mécanisme de réglage selon la revendication 2, caractérisé en ce que la glissière de guidage (13) présente une deuxième surface d'application (14), opposée de façon sensiblement symétrique à la surface d'application (14).

4. Mécanisme de réglage selon la revendication 1, caractérisé en ce que l'élément d'entraînement (15) s'appuie contre une surface d'application (14), qui représente un tronçon de la bague intérieure (24a) d'un palier à roulement.

5. Mécanisme de réglage selon l'une des revendications 1 à 4, caractérisé en ce que la surface latérale (16) de l'élément d'entraînement (15) est un cylindre à base elliptique.

6. Mécanisme de réglage selon l'une des revendications 1 à 5, caractérisé en ce que l'élément d'entraînement (15) est conformé comme un palier à roulement.

7. Mécanisme de réglage selon l'une des revendications 1 à 3, caractérisé en ce que l'élément d'entraînement (15) présente la forme d'un prisme, les doigts d'entraînement (17), lorsque le nombre d'arêtes du prisme est impair, se trouvant dans la zone des arêtes du prisme et, lorsque le nombre d'arêtes du prisme est pair, se trouvant en position médiane, entre les arêtes du prisme.

8. Mécanisme de réglage selon l'une des revendications 1 à 7, caractérisé en ce que les doigts d'entraînement (17) sont creux et, de préférence, sont des douilles de serrage.

9. Mécanisme de réglage selon l'une des revendications 1 à 8, caractérisé en ce que les doigts d'entraînement (17) sont montés tournants dans l'élément d'entraînement (15).

10. Mécanisme de réglage selon l'une des revendications 1 à 9, caractérisé en ce que les doigts d'entraînement (17) dépassent du deuxième composant (12).

11. Mécanisme de réglage selon l'une des revendications 1 à 10, caractérisé en ce que l'élément d'entraînement (15) présente un perçage central (36) destiné à recevoir une clé à pipe à rainures multiples, qui est délimité par des parties de surface cylindrique à base circulaire qui correspondent à des parties des surfaces latérales des doigts d'entraînement et à des parties d'une surface cylindrique circulaire qui s'étend approximativement jusqu'aux axes des doigts d'entraînement.

12. Mécanisme de réglage selon l'une des revendications 1 à 11, caractérisé en ce que la rangée de dents (11) s'étend de façon linéaire et en formant un angle par rapport à la direction de réglage.

13. Mécanisme de réglage selon l'une des revendications 1 à 11, caractérisé en ce que la rangée de dents (11) s'étend en courbe et/ou selon une ligne polygonale en formant un angle par rapport à la direction de réglage.

14. Mécanisme de réglage selon l'une des revendications 1 à 11, caractérisé en ce que le premier composant (10) est conformé en disque (28) ou en secteur de disque (33) et en ce que la rangée de dents (11) est située sur sa circonférence ou sur un tronçon d'arc.

15. Mécanisme de réglage selon l'une des revendications 1 à 14, caractérisé en ce que le mécanisme de réglage est assemblé ou couplé constructivement à au moins un autre mécanisme de réglage, les éléments d'entraînement (15) étant reliés entre eux sans subir de torsion et en pouvant le cas échéant être désolidarisés.
